Europäisches Patentamt

European Patent Office

Office européen des brevets

(11) Publication number: **0 014 049**
A1

# EUROPEAN PATENT APPLICATION

(21) Application number: **80300085.0**

(22) Date of filing: **08.01.80**

(51) Int. Cl.³: **F 16 B 21/18**

(30) Priority: **11.01.79 GB 7900997**

(43) Date of publication of application: **06.08.80**
**Bulletin 80/16**

(84) Designated Contracting States: **DE FR IT**

(71) Applicant: **ANDERTON DISC SPRINGS LIMITED,**
**Moreton Road, Wallingford, Oxfordshire (GB)**

(72) Inventor: **Glendenning, Robert Walter, "Frostwood" Bell**
**Lane Brightwell Cum Sotwell, Wallingford Oxfordshire**
**(GB)**

(74) Representative: **Williams, John Francis et al, J.F.**
**Williams & Co 34 Tavistock Street, London WC2E 7PB**
**(GB)**

(54) **A retaining clip and its use in a mechanical assembly.**

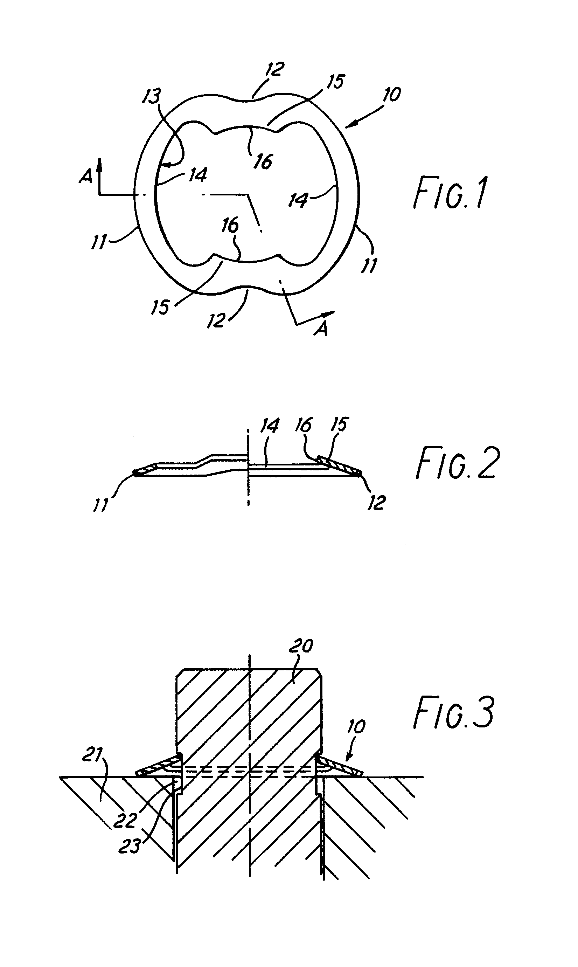

(57) A resilient retaining clip 10 of shallow-domed or frusto-conical configuration is provided with projections 15 for engagement in the groove of a shaft (20 fig. 3 notshown). Indentations 12 are provided adjacent projections 15 and portions 14 between projections 15 are flexible. Projections 15 may be on the outer periphery of clip 10 to enable it to be used in conjunction with an internal groove of a bore. The clip exerts an axial force on a member which it retains.

EP 0 014 049 A1

0014049

-1-

## A Retaining Clip

This invention relates to retaining clips, in particular to clips which are in the form of a spring washer of shallow domed or frusto-conical configuration and which engage on a shaft or spigot or in a bore, to form a stop thereon.

A well-known form of retaining clip is a circlip. This is a simple spring ring which is discontinuous to allow its diameter to be enlarged or reduced for installation purposes in a circular groove in a shaft or bore.

In addition, spring washers are known which are capable of exerting an axial force, but when slid onto a shaft they have no inherent retention on the shaft. They therefore require, for example, a circlip to form an axial abutment.

Furthermore, cup springs are known; for example in G.B. Patent Specification 1288492 there is diclosed in a clutch device a cup spring which engages in a groove on a hub and provides axial pressure against a thrust ring. However, in such arrangements the groove is engaged by the entire inner periphery of the cup spring. This means that when the cup spring is pushed on to the hub there is very substantial frictional resistance, because the inner circumference of the spring must be stretched.

Accordingly the present invention aims to provide a retaining clip which can not only retain itself on a shaft or spigot, or in a bore, and can apply an axial force to a member retained thereby, but can also be readily assembled on to a shaft or bore provided with a groove. The invention achieves this by providing a clip in the form of a spring washer having two or more projections which extend beyond its inner or outer periphery. Thus, there is less frictional resistance to the clip as it is assembled on the shaft or into the bore. Moreover, the arcuate portions of the washer between the projections are flexible. This permits movement of the projections in a direction generally perpendicular to the plane of the washer, thus further easing assembly of the clip on to the shaft or into the bore. For assembly purposes, the projections must be capable of being flexed towards, or away from, the central axis of the washer to allow installation in a bore, or on a shaft. The arcs of the washer lying between the projections must be sufficiently resilient to allow this for given inner and outer radii. Preferably there are two projections, since this allows the arcs between the two to be designed to have the maximum flexing potential and the least stress. The projections preferably have an appreciable arcuate extent.

At the point where the clip is to lodge, the shaft or bore must be provided with a groove, as for a circlip.

In order that the invention will be clearly understood, an exemplary embodiment thereof will now be described with reference to the accompanying drawing in which:

Figure 1 shows a plan view of a spring clip according to the invention;

Figure 2 shows a section on the line A-A in Figure 1; and

Figure 3 shows a mechanical assembly incorporating a spring clip as shown in Figures 1 and 2.

The retaining clip 10 shown is a spring washer formed of a resilient steel known as CS70 or CS80, and approximately 0.028 inches thick. It is of shallow-frusto-conical outline in section.

The outer circumference 11 is circular and of diameter approximately 1.05 inches with two indentations 12 which are smoothly curved to blend with the circular parts. The inner circumference 13 has smoothly curved parts 14 on two opposed sides, while between those parts there are inward projections 15 each having circular inwardly directed surfaces 16. In use these surfaces 16 abut, if they do not actually grip, the shaft on which the clip is mounted.

Figure 3 shows a sectional view of the clip 10 mounted on a shaft 20 to hold a member 21 in place. The shaft 20 has a groove 22 in which lodge the projections 15 of the clip. The bottom surface 23 of the groove has a radius which is slightly larger than the radius of the surfaces 16. In order to instal the clip it must be forced along the shaft 20 from one end, the projections 15 being splayed apart to pass over the even larger diameter of the shaft. Normally, a special tool will be required. For the projections 15 to splay sufficiently, it is expected that one at least of the narrower sections of the clip adjacent the parts 14 will flex. Once the clip reaches the groove 22, the projections 15 snap into the latter and grip the surface 23. Since the projections are not in what would be their normal position as shown in Figure 1, the clip, and in particular the said narrower sections, remain stressed.

The projections 15 abut the side also of the groove 22, while the outer edge of the clip on its other side abut the member 21. The position of the groove is judged so that in this situation the clip is stressed axially and exerts a pre-determined force on the member 21. The actual deflection of the clip caused by this stressed condition depends upon the degree of pre-stressing produced by the fact that the projections are clamped tightly on the bottom of the groove.

It will be noted that the exact design of the spring clip according to the invention will depend on a number of factors, among them the permitted actual and relative radii of the inside and outside of the washer, the spring force to be exerted on the retained member, and the material used.

The clip can equally be designed for use inside a bore, with projections on its outside circumference.

Though described with two projections, it is envisaged that more than two is possible, provided that the arcuate sections between the projections are resilient enough to distort sufficiently within the elastic limit for the clip to be installed by pushing it along the shaft at its full radius. It will be clear that only two projections as shown allows relatively straightforward deflection;

0014049

the distortions of the clip required for three or more projections are much more complex.

The clip described may be manufactured alternatively in beryllium copper or phosphor bronze, plastics, or any other resilient material.

CLAIMS

1. A retaining clip in the form of a spring washer of shallow-domed or frusto-conical configuration characterised in that the washer has two or more projections which extend beyond either the inner or outer periphery of the washer, the arcuate portions of the washer between the projections being flexible to permit movement of the projections in a direction generally perpendicular to the plane of the washer.

2. A retaining clip according to Claim 1, wherein the periphery of the washer not having the projections is provided with indentations opposite the projections.

3. A retaining clip according to Claim 2, wherein the indentations are smoothly curved to blend with the adjacent peripheral portions of the washer.

4. A retaining clip according to any preceding claims, wherein the washer has two diametrically opposed projections.

5. A retaining clip according to any preceding claim, wherein the projections extend beyond the inner periphery of the washer and each projection has a radially-inwardly facing arcuate surface.

6. A mechanical assembly wherein a member is retained on a shaft or in·a bore by a retaining clip according to any of Claims 1-4, the shaft or bore having a groove which receives the projections, and the retained member being subject to an axial force exerted by the retaining

0014049

clip.

7. A mechanical assembly according to Claim 6, wherein each projection has a radially facing arcuate surface which abuts the bottom of the groove.

0014049

FIG.1

FIG.2

FIG.3

**EUROPEAN SEARCH REPORT**

European Patent Office

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | <u>GB - A - 702 932</u> (MOTOREX) <br> * Page 2, lines 106-122; figures 7-9 * | 1,5-7 | F 16 R 21/18 |
| X | <u>FR - A - 1 598 241</u> (D.B.A.) <br> * Page 2, lines 20-32 * | 1,5-7 | |
| X | <u>GB - A - 737 703</u> (RINGSPANN) <br> * Page 3, lines 8-19; figures 5,6 * | 1,2,5 | **TECHNICAL FIELDS SEARCHED (Int.Cl. 3)** <br><br> F 16 R 21/18 |
| | <u>GB - A - 628 288</u> (WESTINGHOUSE) <br> * Page 1, lines 79-93 * | 1,4,5 | |
| | <u>US - A - 2 401 856</u> (AUTOMOTIVE <br><u>PRODUCTS</u>) <br> * Column 4, lines 17-41; figure 9 * | 1,4,5 | |
| | <u>DE - A - 2 161 687</u> (SOFFNER) <br> * Page 2, lines 1-5 * | 1,4,5 | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons |
| | <u>DE - C - 801 353</u> (TISCH) <br> * Page 2, lines 38-43 * | 2,3 | |
| | ./. | | &: member of the same patent family, corresponding document |

| | The present search report has been drawn up for all claims | |
|---|---|---|
| Place of search | Date of completion of the search | Examiner |
| The Hague | 14-02-1980 | SEIFRIDSBERGER |

EPO Form 1503.1 06.78

| | DOCUMENTS CONSIDERED TO BE RELEVANT | | CLASSIFICATION OF THE APPLICATION (Int. Cl. 3) |
|---|---|---|---|
| Category | Citation of document with indication, where appropriate, of relevant passages | Relevant to claim | |
| A | <u>DE - C - 936 548</u> (ALBRECHT) | | |
| A | <u>GB - A - 457 087</u> (GRAF) | | |
| | ---- | | |
| | | | **TECHNICAL FIELDS SEARCHED (Int. Cl. 3)** |